# EUROPÄISCHE PATENTSCHRIFT

(11) **EP 4 191 240 B1**
(45) Veröffentlichungstag und Bekanntmachung des Hinweises auf die Patenterteilung: **12.11.2025**
(21) Anmeldenummer: 22211044.7
(22) Anmeldetag: 02.12.2022
(51) Int. Cl.: G01N 29/06

(54) **VERFAHREN UND VORRICHTUNG ZUR MEHRDIMENSIONALEN, TOMOGRAPHISCHEN MATERIAL- UND/ODER ZUSTANDSPRÜFUNG SOWIE SENSOR HIERFÜR**
METHOD AND DEVICE FOR MULTIDIMENSIONAL TOMOGRAPHIC MATERIAL AND/OR CONDITION INSPECTION, AND SENSOR THEREFOR
PROCÉDÉ ET DISPOSITIF D'INSPECTION TOMOGRAPHIQUE MULTIDIMENSIONNELLE DE MATÉRIAUX ET/OU D'ÉTATS ET CAPTEUR CORRESPONDANT

(30) Priorität: 02.12.2021 EP 21212025
(43) Veröffentlichungstag der Anmeldung: 07.06.2023
(73) Patentinhaber: Rinn, Frank, 69124 Heidelberg (DE)
(72) Erfinder: Rinn, Frank, 69124 Heidelberg (DE)
(74) Vertreter: Ullrich & Naumann PartG mbB

(56) Entgegenhaltungen:
- US-A- 5 804 728
- US-A1- 2008 110 242
- US-B2- 7 596 470

## Beschreibung

Seit den 1960er Jahren wird die Schallgeschwindigkeit (v) in Holzmasten längs zur (Holz-) Faser gemessen und als Maß für deren Tragfähigkeit verwendet, weil sich das dynamische Elastizitätsmodul (E) bei bekannter Dichte als proportional zu v² erwies. Aus den 1980er Jahren sind Schall-Laufzeitmessungen quer zur (Holz-) Faser zur Schadensdetektion an Bäumen und Hölzern zwischen einem Schall-Sender ("Impulshammer") und einem Empfänger ("Sensor") bekannt, die sich jedoch in der Praxis als wenig zielführend erwiesen, weil sie entweder zu ungenau oder viel zu aufwändig waren, wenn man verlässliche Ergebnisse erzielen wollte. Für Messung, Analyse und Beurteilung des Querschnitts eines Baumes brauchte man etliche Stunden oder Tage.

Ultraschallverfahren scheiterten zur gleichen Zeit an der Kombination aus Inhomogenität und Anisotropie des Materials Holz, zumal für die Anwendung der gängigen Ultraschall-Sensoren die Rinde an der Mess-Stelle entfernt werden muss. Für eine tomographische Zustandserfassung musste die Rinde daher rundum entfernt werden, was jedoch zwangsläufig zum Absterben des Baumes führt. Daher war eine zerstörungsfreie oder zerstörungsarme Prüfung des Querschnitts auf diesem Wege nicht möglich.

Erst nachdem ein Schalltomograph aus elektronisch verketteten und eigenständig messenden Sensoren international patentiert wurde ("Arbotom^{®}": PCT/DE00/01467, Mai 1999), etablierte sich diese neue Methode in der Praxis zur Feststellung des Vorliegens und der Ausdehnung von (zumeist inneren) Schäden: bei diesem System wurden möglichst viele einzelne und elektronisch eigenständig auswertende Sensoren jeweils auf ein durch die Rinde ins Holz gehendes Verbindungsmittel (Nagel oder Schraube) gesetzt und damit fest verbunden. Gemessen wurde die Laufzeit von Schallimpulsen zwischen allen Sensoren, die per manuellem Hammerschlag auf ebendiese erzeugt wurden. Die elektronisch verketteten Sensoren dienten also jeweils zugleich als Sender und Empfänger. Damit war es erstmals möglich, ausreichend präzise und zuverlässige Daten zur Resttragfähigkeit auf quasi zerstörungsfreiem Wege und zu vertretbaren Kosten am Objekt zu ermitteln, brauchte aber pro Querschnitt alter Bäume durchaus noch typischerweise 30 Minuten oder länger.

Die Auswertung anderer Impulseigenschaften (Intensität, Abklingverhalten, Frequenz, ...) erwies sich dabei als nicht zielführend, weil die Ergebnisse insbesondere aufgrund der manuellen Impulserzeugung unsystematisch variierten. Letztlich zeigte sich die Laufzeit der Impulse als einzig "robust" genug gegenüber den schwierigen und oftmals stark schwankenden Rand- und Umfeldbedingungen der jeweiligen Messung (Schlag-Intensität, Temperatur, Feuchtigkeit, Ankopplungsstärke, ...).

Die Anwendung erfolgt seither sowohl an Bäumen und Hölzern (z.B. Brettschichtträgern/"Leimbindern"), als auch an Massivbaumaterialien wie z.B. Betonstützen. Obwohl die Sensoren selber nur die Laufzeit der am schnellsten ankommenden Impulse feststellten und damit weit weniger Informationen zu den Impulsen und Wellen sammeln, als beispielsweise bei Ultraschall-Techniken üblich, erlaubte diese Methodik aufgrund der vergleichsweise hohen Anzahl an Stützstellen (=Sensoren) eine grundlegend neue und bis dahin nicht erreichte Qualität der Zustandstomographie - wobei das zentrale Ergebnis bei der Anwendung an geschädigten Stammquerschnitten eigentlich nur in der prozentualen Minderung der mechanischen Tragfähigkeit liegt.

Mittlerweile hat sich diese Methode weltweit in spezialisierten Fachkreisen etabliert. Einige Tausend entsprechender Tomographen verschiedener Hersteller befinden sich in der praktischen Anwendung, zumeist an Universitäten, Forschungsinstitutionen und bei entsprechend spezialisierten Fachleuten bzw. Sachverständigen.

In gut 20 Jahren der praktischen Anwendung haben sich einerseits die technischen Möglichkeiten und Grenzen dieses Verfahrens gezeigt, andererseits aber auch, dass es noch weit mehr potentielle Anwendungsgebiete gäbe,
· wenn die Tomographen deutlich kostengünstiger und die Sensoren kleiner wären;
· wenn die Sensoren nicht nur kleiner, sondern robuster und auch wasserdicht wären;
· wenn die technische (räumliche) Auflösung der Ergebnisse deutlich erhöht würde;
· wenn die Messwerte definiert, reproduzierbar und kalibrierfähig wären;
· wenn Anwendung und Auswertung schneller und einfacher sowie weitestgehend automatisiert erfolgen würden;
· wenn weitere Material- und Struktur-Eigenschaften nicht nur von Holz und Bäumen, sondern auch von Glocken, Beton (und anderen Massivbaumaterialien), Fassadenkonstruktionen sowie von Hochwasserdämmen erfasst werden könnten.

Die Patentanmeldung US 2008/110242 A1 offenbart tomographische Material- und Zustandsmessungen mittels Mikrowellen- und Ultraschallsensoren.

Ein neuer Tomograph muss also viel mehr können als die bisherigen und dennoch wesentlich kostengünstiger sein. Bei den aktuell etablierten Tomographen nur die Anzahl der Sensoren zu erhöhen, würde keinen wesentlichen Fortschritt bringen, allerdings Kosten und Aufwand entsprechend deutlich erhöhen.

Insofern ist also eine grundlegend neue Konzeption erforderlich - daher die hier nachfolgend beschriebene, neue Erfindung gemäß den angehängten Ansprüchen.

Dabei ist im Konkreten ein Verfahren zur mehrdimensionalen, tomografischen Material- und/oder Zustandsprüfung an einem Prüfling gemäß Anspruch 1 angegeben.

Je nach Erfordernis können die Impulse oder Signale mechanische, elektrische, di-elektrische, thermische und/oder elektromagnetische Impulse oder Signale umfassen, wobei mechanische Impulse oder Signale mittels eines Piezo-Kristalls erzeugt werden können.

Die Impulse oder Signale oder eine Auswahl von gleichartigen oder verschiedenartigen Impulsen oder Signalen können oder kann von dem oder den Sensoren oder der Elektronik kombiniert, gleichzeitig und/oder zeitlich koordiniert erzeugt, ausgelöst, ausgesendet, empfangen und/oder aufgezeichnet werden. Es können alle, also auch die mechanischen, Impulse oder Signale in allen Sensoren automatisiert in definierter Weise und damit reproduzierbar identisch erzeugt werden, um vergleichbare und erstmals absolutwert-kalibrierfähige Analysen zu ermöglichen.

Die Impulse oder Signale oder eine Auswahl von gleichartigen oder verschiedenartigen Impulsen oder Signalen können oder kann in mindestens einem Sensor - in definierter Weise oder per Zufallsgenerator - automatisiert erzeugt werden.

Alternativ oder zusätzlich hierzu können die Impulse oder Signale automatisiert und damit ohne menschliche Einwirkung oder Aktivität von den Sensoren oder der Elektronik der Sensoren selbst angeregt, erzeugt, ausgelöst, ausgesendet, empfangen, gespeichert und/oder analysiert werden.

Die Höhe, Form, Intensität, Frequenz/Wellenform und/oder zeitliche Länge der ausgesendeten Impulse oder Signale kann oder können adaptiv verändert werden, um - im Hinblick auf eine Erhöhung der Aussagekraft des Verfahrens - eine Anpassung an Randbedingungen, Störsignale und/oder Materialeigenschaften des Prüflings und/oder an bereits aufgenommene Messdaten oder erzielte Messergebnisse durchzuführen. Dabei können im Konkreten durch andere Sensoren aufgenommene Messdaten oder erzielte Messergebnisse zur Anpassung verwendet werden, um eine Erhöhung der Aussagekraft des Verfahrens zu erreichen.

Die Anpassung kann im Laufe einer Messung und/oder automatisch adaptiv, beispielsweise nach vorgegebenen Zeitintervallen, erfolgen.

Des Weiteren kann ein Abklingverhalten an einem oder mehreren Sensoren genutzt werden, wobei nach einer Anregung, Erzeugung, Auslösung und/oder Aussendung eines oder mehrerer Impulse oder Signale durch einen Sensor oder eine Elektronik des Sensors eine Relaxation an diesem Sensor, an dieser Elektronik und/oder an einem Verbindungsmittel zum Prüfling gemessen und/oder aufgezeichnet werden kann.

Weiterhin können die Impulse oder Signale zeitlich so überlappend oder zeitversetzt angeregt, erzeugt, ausgelöst und/oder ausgesendet werden, dass die für die Prüfung oder eine Messung insgesamt notwendige Zeit minimiert wird, oder können mechanische Impulse oder Signale zeitgleich oder in resonanter Weise ausgesendet werden, um beispielsweise entsprechende Materialeigenschaften besser charakterisieren zu können.

Elektromagnetische Impulse oder Signale können mittels einer - vorzugsweise baulich-konstruktiv miniaturisierter - Richtantenne in einem vorgegebenen Winkel abgestrahlt werden, sodass ein definierter Impuls-Signal-Lauf-Pfad durch den Prüfling erreicht wird.

Alternativ oder zusätzlich hierzu kann ein Ankommen von insbesondere elektromagnetischen Impulsen oder Signalen als Startsignal für das Loslaufen von Impulsen oder Signalen von mindestens einem anderen Sensor, insbesondere auch der mechanischen Impulse oder Signale, verwendet werden.

An den Sensoren kann eine Anzeige realisiert werden, deren Nummer und/oder Position als Zahl und/oder Buchstabencode und/oder als Code oder Barcode angezeigt wird.

Alternativ oder zusätzlich hierzu können die Sensoren mit einem Kopplungsmittel verbunden werden, das sowohl eine mechanische als auch eine elektrische Verbindung ermöglicht, wobei vorzugsweise als Kopplungsmittel ein Flachbandkabel oder Flachriemen verwendet werden kann.

Das Kopplungsmittel kann zur äquidistanten Verbindung der Sensoren in Form von gleichlangen und/oder zugfesten und/oder weich-flexiblen Kopplungselementen realisiert werden.

Das Kopplungsmittel oder die Kopplungselemente kann oder können per aufgebrachter Markierung eine automatische, vorzugsweise optische, Vermessung des Prüflings, dessen Geometrie und/oder der Sensor-Positionen ermöglichen, beispielsweise anhand einer Fotografie.

Die Sensoren oder Platinen der Sensoren können mit - vorzugsweise vier oder sechs - Verbindungselementen zum Anschluss der Kopplungsmittel oder Kopplungselemente derart versehen werden, dass eine ein-, zwei- oder dreidimensionale und/oder gitterförmige gekoppelte Anordnung der Sensoren möglich ist.

Des Weiteren ist gemäß der Erfindung eine Vorrichtung zur mehrdimensionalen, tomografischen Material- und/oder Zustandsprüfung an einem Prüfling gemäß Anspruch 15 angegeben.

Im Folgenden werden wichtige Aspekte von Ausführungsbeispielen der Erfindung kurz erwähnt:
Es erfolgt eine Kombination verschiedener physikalischer Methoden im gleichen Sensor, der als Elektronik-Box realisiert sein kann.

Es kann eine automatisierte Impuls- oder Signalerzeugung erfolgen.

Es können reproduzierbare, klar definierte Impulse oder Signale unterschiedlicher Intensität, Anzahl, Länge und Form erzeugt werden.

Eigenschaften der Signale können schon während der Messung an die Anforderungen, Prüflingseigenschaften und bereits erzielten Ergebnisse angepasst werden (instantan adaptive Signale).

Es können zugfeste, aber querflexible Verbindungskabel zugleich als Markierungen, Abstandsmarker oder 3D-Form-Geber verwendet werden.

Es kann eine quasi äquidistante Sensor-Anordnung erfolgen, je nach Anforderung in 1D-Anordnung ("Gürtel um Baum, Betonpfeiler, Glocke), 2D-Anordnung (Netz auf Oberflächen: Fassaden, Hochwasserdamm), oder 3D-Anordnung (im Beton mit eingebaut).

Die hier beschriebene, neue Form der Tomographie vereint nicht nur mehrere, grundlegend verschiedene physikalische Messprinzipien, sondern kombiniert diese auch in ganz neuer Weise, was zu grundlegend neuartigen Abläufen führt und damit vielfältige Vorteile erbringt, die gänzlich neue Anwendungsfelder eröffnen sowie deutlich weitergehende Analysen und Beurteilungen (als bislang denkbar) ermöglichen - bei zugleich geringeren Kosten.

### Detaillierte Beschreibung von Ausführungsbeispielen:

### Miniaturisierung

Indem möglichst alle elektronischen Aufgaben, die in den Sensoren auszuführen sind, in einen anwendungsspezifischen Schaltkreis integriert werden, verringern sich nicht nur die Abmessungen, sondern sinken bei ausreichenden Produktionszahlen auch die Stückkosten erheblich, sodass die deutlich kostengünstigere Elektronik in ein kleineres und ebenso entsprechend kostengünstigeres Gehäuse untergebracht werden kann. Damit kann die Anzahl der Tomographie-Sensoren deutlich erhöht werden, ohne die Herstellkosten insgesamt zu erhöhen, was nicht nur die Auswertungen genauer und verlässlicher macht, sondern auch ganz neue Anwendungsfelder erschließt. So hat sich z.B. gezeigt, dass statisch gefährliche Hohlräume in Hochwasserdämmen mit Schall-Laufzeitmessungen gefunden und lokalisiert werden können - allerdings nur, wenn eine sehr große Anzahl an Sensoren in einem möglichst engen und regelmäßigen Raster auf der gekrümmten Oberfläche angeordnet werden. Dies war mit den bisherig verfügbaren Techniken in der Anwendungs-Praxis nicht möglich.

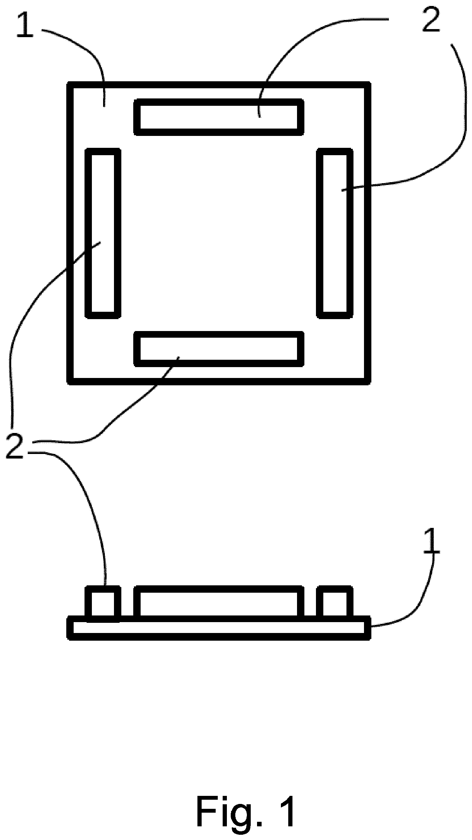

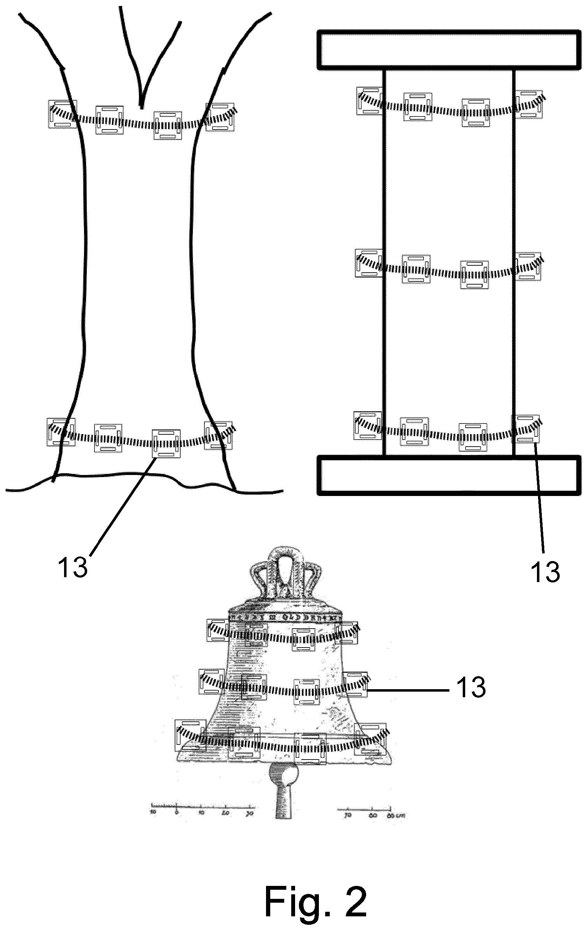

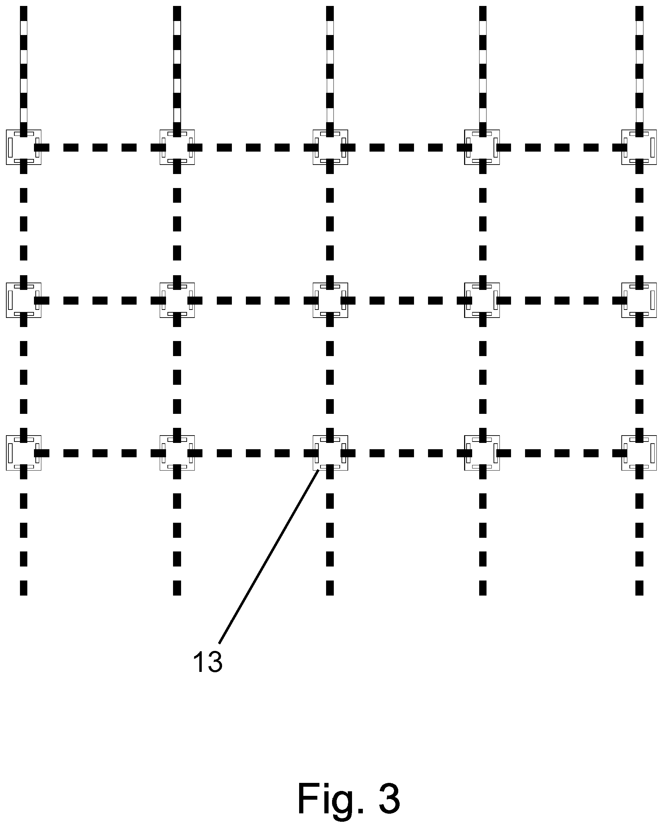

Die beispielsweise quadratischen Sensor-Platinen (Fig. 1) werden daher vorzugsweise mit 2 oder 4 (zu den 4 Seiten orientierten), optional mit 6 Steckverbindern versehen (einer zusätzlich nach oben, einer nach unten):
· wenn die Sensoren in linearer Anordnung verwendet werden, um diese beispielsweise wie einen Gürtel um den Querschnitt eines Baumes, um eine Kirchenglocke oder einen Betonpfosten herum zu legen, werden jeweils nur zwei der Steckverbinder benötigt (Fig. 2);
· soll eine (ggf. gekrümmte) Oberfläche, beispielsweise ein Hochwasserdamm, nach Hohlräumen untersucht werden, werden die Sensoren zur flächigen Anwendung wie ein zweidimensionales Netz mit vorzugsweise äquidistanten Knoten verbunden, wobei dann vorteilhafterweise alle vier seitlichen Steckverbinder der Sensoren mit Kabeln versehen werden (bis auf die Sensoren am Rand des Netzes, die je nach Position nur 3 oder 2 Verbindungen benötigen: Fig. 3);
· bei der dreidimensionalen Anwendung zur Dauerüberwachung von Massivbau-Elementen sollen die Sensoren in einem vorzugsweise äquidistanten dreidimensionalen Gitter angeordnet und in den Beton mit eingegossen werden.

Die Steckverbinder befinden sich vorteilhafterweise im vorzugsweise wassergeschützt ausgeführten Gehäuse, wobei die Elektronik selbst beispielsweise mittels Vergussmasse wasserdicht und vor Erschütterungen geschützt in einem umliegenden, weichen und damit vor Erschütterungen schützenden Material gelagert wird.

Für die dauerhafte Überwachung einer Beton-Konstruktion, beispielsweise einer Brücke, können die Sensoren quasi wie ein dreidimensionales Gitter mit zugfesten Kabelverbindungen verknüpft, in die zunächst noch leeren Bauteil-Formen eingehängt und bei der Erstellung der Konstruktion also mit "einbetoniert" werden. Damit ist es sodann möglich, nicht nur während und nach der Herstellung der Konstruktion, Homogenität, Stabilität und andere Struktur- Eigenschaften des Materials kontinuierlich zu überwachen, sondern anschließend auch (nicht nur innere) Alterungsprozesse sowie sonstige Schäden frühestmöglich zu erkennen und entsprechende Maßnahmen einzuleiten - um weitere Schäden oder gar Unfälle zu vermeiden.

### Äquidistante Standard-Verkabelung

Bislang wurden im 1999 vorgestellten Arbotom^{®}-Schalltomographen standardisierte Computerkabel verwendet, nicht nur, weil diese kostengünstig und in verschiedenen Längen verfügbar, sondern auch, weil diese im Bedarfsfalle einer Auswechslung weltweit im Handel erhältlich waren. Weil die Anzahl der Sensoren vor allem wegen der Kosten und des Montage-Aufwands beschränkt war, mussten Kabelverbindungen unterschiedlicher Länge möglich sein, um beispielsweise auch Bäume mit breitem Stammfuß oder große Brettschichtträger untersuchen zu können. Dies ging am besten mit standardisierten und im Computerbereich handelsüblichen Kabeln. Diese Kabel mussten dann allerdings bei jeder Anwendung des Systems neu gesteckt werden, was entsprechende Zeit kostet und die Haltbarkeit der Kabel, Stecker und Buchsen reduziert, weil die Anzahl von deren Steckzyklen eher begrenzt ist. Außerdem bergen Steckverbindungen bei der Anwendung im Feld stets auch die Gefahr, durch Staub und Dreck, oder gar durch Feuchtigkeit, beeinträchtigt oder gar unbrauchbar zu werden. Schließlich ist die Zugfestigkeit dieser Steck-Verbindungen bauartbedingt eher begrenzt, denn für Zugbelastungen sind diese nicht gedacht.

Daher hat das hier beschriebene, neue System, ein Spezialkabel in einer Einheitslänge von z.B. 25cm (was ungefähr 10 Zoll entspricht und damit die Internationalisierung erleichtert). Diese Einheitslänge definiert damit quasi den Maximalabstand benachbarter Sensoren. Bei den tausenden bisherigen Anwendungen zeigte sich, dass der engste Sensor-Abstand typischerweise meist im Bereich um 20 bis 30cm liegt.

Die relativ kurze Einheitslänge der Kabel ermöglicht einerseits hohe Produktionsstückzahlen (somit entsprechend niedrige Herstellungskosten) und führt andererseits zwangsläufig dazu, dass deutlich mehr Sensoren als bislang üblich verwendet werden (müssen), um die zu prüfenden Querschnitte zu umfassen. Am Baum, beispielsweise, vervierfacht sich die Anzahl der Sensoren damit zwangsläufig, weil Sensoren eben einerseits nicht weiter voneinander entfernt gesetzt werden können, man andererseits aber den kompletten Umfang besetzen muss. Damit wird die Analyse erheblich verbessert, insbesondere hinsichtlich der örtlichen Auflösung der tomographischen Querschnitt-Rekonstruktion, denn diese steigt quadratisch zur Anzahl der Sensoren.

Möglich wird dies allerdings natürlich nur, weil die neuen Sensoren kleiner und erheblich kostengünstiger sind, sodass trotz deutlich erhöhter Anzahl an Sensoren die Gesamtkosten für das System nicht steigen.

Damit die elektronischen Sensor-Verbindungs-Kabel einerseits ausreichend zugfest sind, andererseits aber in Längsrichtung keine mechanischen Impulse (Vibrationen) übertragen, werden diese vorzugsweise in der Art eines Flachriemens aus (temperaturunabhängig) hochflexiblem Material ausgeführt, beispielsweise Polyurethan, mit ausreichend vielen, elektrisch leitenden, möglichst flexiblen Adern (z.B. aus Kupferlitzen), bekannt aus (DE 10 2019 200 497 A1). Dieserart Riemen verhalten sich quasi wie hochflexible, aber sehr zugfeste Flachbandkabel und können auch bei tieferen Temperaturen eingesetzt werden. Sie sind sehr zugfest in Längsrichtung, aber in Querrichtung sehr flexibel, übertragen also praktisch keine Vibrationen von Sensor zu Sensor (was in kritischer Weise entscheidend ist für eine Schalltomographie).

Wenn Sensoren in Betonkonstruktionen integriert werden sollen, können die mit diesen Kabelriemen zu einem zwei oder dreidimensionalen (Gitter-) Netz verbundenen Sensoren ähnlich wie die Stahlbewährungskäfige in die zu vergießenden Volumina eingehängt werden. Wenn die Sensoren dann mit den hier beschriebenen Kabeln gleicher Länge (also äquidistant) verbunden sind, dann ergeben die Übertragungsmuster der verschiedenen Impulsarten eine den Abständen entsprechend charakteristische Matrix. Dies macht es einfacher, Abweichungen von diesem (charakteristischen) Muster als Hinweis auf abweichende Eigenschaften (bei Herstellung oder später im Betrieb), beispielsweise auftretende Risse oder andere Schäden, zu interpretieren. Bei gleichwohl auch möglichen, ungleichmäßigen Abständen zwischen den Sensoren, müssen vorzugsweise zu Beginn der Nutzung aufwändigere Kalibrationsmessungen erfolgen, um später Strukturveränderungen leichter und schneller mittels Referenz-Vergleich erkennen zu können.

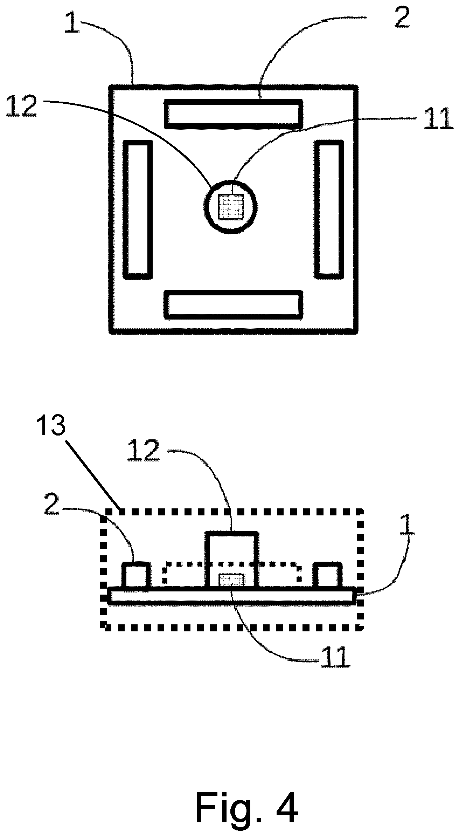

Um die Kabel mit den Sensor-Platinen zu verbinden, können einfache und extrem kostengünstige, weil weitläufig verbreitete Flachbandstecker verwendet werden, was nicht nur erhebliche Kostenvorteile erbringt, sondern zugleich auch eine mechanisch robuste Verbindung darstellt. Da diese Steckverbindung nur im seltenen Fall eines defekten Kabels gelöst werden muss, stellen die maximal möglichen Steckzyklen dieser Verbindungen keine nennenswerte Limitierung der Lebensdauer des Systems dar. Zum Kabelwechsel wird das äußere Gehäuse 13 geöffnet, welches mit dem Verschließen das Kabel automatisch ein- und damit auch als Zugentlastung festklemmt sowie das Innere von Feuchtigkeit und Staub schützt, siehe Fig. 4.

### Geometrie-Vermessungs-Kabelmarkierung

Bei allen Anwendungen muss die Position der Sensoren erfasst werden, nicht nur, weil deren jeweiliger Abstand wichtig ist für die Berechnung und Beurteilung der Ergebnisse, sondern auch, weil die Position der Sensoren insbesondere bei den Anwendungen auf Oberflächen eben deren ohnehin zu erfassende Geometrie und damit Form des Prüflings repräsentiert. Die Genauigkeitsanforderungen der Positionierung hängt dabei von der jeweiligen Aufgabenstellung ab. Bei den typischerweise untersuchten, großen alten Bäumen reicht eine Erfassung der Position auf ca. 5cm genau in der Regel aus. Es gibt aber auch Anwendungen, beispielsweise an Betonstützen oder an Glocken, bei denen die Positionen auf ungefähr 1cm genau erfasst werden sollten. Je höher die Schallgeschwindigkeit in einem Medium und je enger die Abstände der Sensoren, umso präziser muss deren Position erfasst werden.

Am Baum oder an der Betonstütze wird bislang entweder ein zusätzliches Maßband parallel zu den Sensorverbindungen angebracht oder eine sogenannte Kluppe (= großer Messschieber) verwendet. Das Maßband ist zwar kostengünstig und vergleichsweise schnell in der Anwendung, es bedarf aber einiger Übung, um beispielsweise Abweichungen von der Kreisform zu erfassen. Das wiederum geht sehr gut mit einer mechanischen Kluppe und einer Triangulation in der Software des Mess-PCs, erfordert jedoch einen erheblichen zusätzlichen Zeit- und Kostenaufwand - und hat sich an alten Bäumen zumeist als nicht notwendig erwiesen. Per Funk mit dem messenden MobilPC verbundene Kluppen sind etwas schneller in der Anwendung, jedoch vielfach teurer - und führen oft dazu, dass die Kosten zu hoch sind für eine Anwendung des Gesamtsystems. Auch wegen der damit verbundenen Kosten und des mitunter erheblichen Zeitaufwands sind weite potentielle Anwendungsbereiche der Tomographie bislang nicht erreichbar.

Damit die geometrische Position der Sensoren am Prüfkörper möglichst automatisiert, schnell und kostengünstig, aber dennoch exakt und nachprüfbar erfasst werden kann, dienen hier nun die Kabel und Sensoren selbst als Maßband und Markierung, indem sie mit einem regelmäßigen Farbmuster mit vorzugsweise maximalem Kontrast versehen werden, also quasi mit einem aufgedruckten Maßstab, der auf Fotos anschließend als Basis für die (automatische) Erfassung der Geometrie des Prüflings und Positionierung der Sensoren verwendet werden kann. Da bei allen Anwendungen ohnehin eine photographische Dokumentation der Sensoren und ihrer Positionierung zwingend erforderlich ist, müssen sowieso jeweils Fotos aller Sensoren an ihren jeweiligen Positionen erstellt werden. Auf den Sensoren selber wird hierzu beispielsweise zusätzlich zu einer (vorzugsweise laufenden) Nummer und optional ein z.B. zweidimensionaler Barcode aufgebracht oder (z.B elektronisch) angezeigt, was später dann in den Fotos eine automatisierte Identifikation des jeweiligen Sensors, seiner Nummer, seiner Abstände zu anderen und damit eine automatische Zuordnung zu einer Position im dreidimensionalen Raum ermöglicht.

Auf die (Flachband-) Kabel zwischen den Sensoren, die vorzugsweise in jeweils gleicher Länge ausgeführt werden, wird beispielsweise ein Maßstab aufgedruckt, bei dem z.B. alle 5cm die Farbe wechselt, sodass dies auch aus größerer Entfernung auf Fotos sichtbar ist.

Zur Vereinfachung der Geometrie-Erfassung kann das aufgebrachte Muster auf dem Kabel, je nach Genauigkeitsanforderungen, zusätzlich entsprechende Strichmarkierungen aufweisen mit einem feineren Maßstab. Damit ist dann auch eine manuelle Erfassung der Sensorabstände und Positionen bei der Montage recht einfach. Die Kabel dienen also nicht nur der elektrischen Verbindung (Stromversorgung, Kommunikation, Austausch der Analyse-Ergebnisse) und mechanisch zugfesten Kopplung, sondern zugleich auch der Positionserfassung und Geometrievermessung der zu untersuchenden Querschnitte bzw. Prüfkörpergeometrien.

Weil der Tomograph oft in der Natur, beispielsweise an Bäumen im Wald oder Park, oder an Stützen auf Baustellen oder in Gebäuden verwendet wird, werden hier zwecks bestmöglicher automatischer Erkennung der Sensoren und der Prüflings-Geometrie Farben bzw. Farbkombinationen verwendet werden, die einen besonders hohen Kontrast aufweisen, z.B. Schwarz-Weiß, oder ansonsten (insbesondere in der Natur) eher selten vorkommen, z.B. Magenta-Phosphor. Anhand eines solchen, klar definierten Helligkeits- und Farbmusters ist die dreidimensionale Erfassung der Positionen der Sensoren anhand von beispielsweise Smartphone-Fotos relativ einfach und bedarf nicht zwingend einer 3D-Kamera (zur Erfassung dreidimensionaler Oberflächenstrukturen), die gleichwohl heute schon bei etlichen teuren Smartphones Standard sind.

Sodann erfordert die Positionierung der Sensoren keinen gesonderten Arbeitsaufwand mehr, weil die Position der Sensoren im dreidimensionalen Raum per Software automatisiert aus den Fotos ermittelt werden kann, die zur Dokumentation ohnehin anzufertigen sind. Entsprechende Algorithmen sind mittlerweile sogar schon in kostengünstigen Softwareanwendungen (APPs) auf SmartPhones verfügbar. Damit entfällt einer der bislang aufwändigsten Arbeitsschritte, was eine entsprechend deutliche Zeitersparnis bedeutet und es zugleich ermöglicht, die Tomographie genauer und dennoch kostengünstiger anzubieten. Denn die Positionierung wird nicht nur schneller, sondern eben auch exakter und zuverlässiger, weil manuelle Fehlerquellen ausgeschlossen werden.

Je nach Anwendung kann es erforderlich sein, die Abstände zwischen manchen Sensoren enger zu wählen, als durch die hier beschriebenen, in der Länge standardisierten Kabel vorgegeben ungefähr vorgegeben. Dies ist jedoch kein Problem, denn die Kabel müssen ja nicht ausgestreckt verwendet werden, sondern sollten sogar eher nur lose zwischen den Sensoren hängen bzw. liegen.

### Methoden

Um ein breiteres Anwendungsspektrum sowie die höchstmögliche Genauigkeit und Verlässlichkeit der Messergebnisse zu erreichen, werden hier erstmals grundverschiedene technische Verfahren in den gleichen Sensoren kombiniert, die Signale reproduzierbar definiert und koordiniert gesendet und erfasst, die erzielten Daten koordiniert und in Kombination ausgewertet und beurteilt:
➢ mechanische Impulse (Körper-Schall)
➢ thermische Impulse
➢ elektrische Impulse (Impedanz / Permittivität)
➢ elektromagnetische Impulse

Bei der bislang üblichen Schalltomographie wurde bislang nur die Laufzeit der ersten am empfangenden Sensor einlaufenden Signale gemessen - das hatte viele Vorteile im Vergleich zur bis dato am Baum stets gescheiterten Ultraschallmethodik und den ansonsten üblichen, punktuellen Messverfahren und ermöglichte erstmals eine dreidimensionale Schall-Tomographie an Bäumen und Holz sowie auch an Beton. Allerdings können damit eben nur ein kleiner Teil der in der Praxis vorkommenden Fragen beantwortet werden und angrenzende, weit größere Anwendungsbereiche (z.B. an Massivbau-Konstruktionen, Glocken, Fassadenplatten und Hochwasserdämmen) sind damit grundsätzlich nicht erreichbar.

Daher werden hier nicht nur verschiedene physikalische Messprinzipien kombiniert, sondern dabei auch jeweils verschiedene Kenngrößen der gesendeten und empfangenden Impulse in Kombination gemessen und gespeichert:
➢ Laufzeit der Impulse vom jeweiligen Sender zu allen anderen, empfangenden Sensoren sowie zum Sender wieder zurück;
➢ Transiente der gesendeten und empfangenden Impulse sowie insbesondere Impulshöhe, Impulsbreite, Impulslänge, Schwingungs-, Dämpfungs- und Abklingverhalten (am sendenden und empfangenden Sensor) sowie die Energieübertragungs-Bilanz;

In Kombination und Koordination können auf diesem Wege weit mehr Materialeigenschaften und -parameter erfasst werden, als mit der bislang üblichen Technik - wobei die Genauigkeit und Auflösung der Ergebnisse und Aussagen zum Materialzustand auch aufgrund der nun deutlich höheren Anzahl an Stützstellen zusätzlich deutlich verbessert werden.

All diese Parameter sind aber nur dann sinnvoll, ausreichend präzise und vor allem reproduzierbar zu messen und auszuwerten, wenn die Impulserzeugung automatisiert und reproduzierbar erfolgt - was bislang ebenso technisch nicht möglich war.

### Schall

Die mittlerweile hochentwickelten Ultraschall-Sensoren werden meist im SinglePoint-Verfahren eingesetzt, wo ein Sensor sendet und empfängt. Dies macht diese Sensoren entsprechend teuer und empfindlich. Dennoch liefert dieses Vorgehen in vielen Bereichen aufgrund von Inhomogenitäten, Gefügestörungen, E-Modul- und Dichtegradienten sowie Beugungs-, Brechungs- und Grenzschichteffekten keine sinnvollen Ergebnisse. Eine dreidimensionale Zustandstomographie an Holz oder Beton ist damit beispielsweise aus verschiedenen technischen und prinzipiellen Gründen (u.a. "Schattenwurf" durch Störstellen und Grenzflächen) noch nicht gelungen und bleibt möglicherweise auch dauerhaft unmöglich.

Überwinden kann man diese Einschränkungen am besten durch eine deutliche Erhöhung der Anzahl an zeitgleich besetzten "Stützstellen" (= sendende und empfangende Sensoren) in Kombination mit einer erweiterten Erfassung verschiedener Impulseigenschaften.

Bei den meisten bisherigen Schalltomographen wurden beispielsweise "ELEKTRET"-Mikrophone zur Detektion der (manuell per Hammer erzeugten) Impulse verwendet. Diese Mikrophone sind zwar kostengünstig und ausreichend präzise, können aber Signale nur empfangen.

Hier werden demgegenüber nun aber spezielle Piezo-Kristalle verwendet, die entscheidende Vorteile bieten, denn sie ...
1. sind kostengünstiger und erlauben daher die Herstellung vieler Sensoren zu günstigeren Preisen, womit weit größere Marktsegmente erreicht werden können;
2. haben keine beweglichen Teile und zeigen praktisch keine (anwendungsrelevanten) Alterungserscheinungen;
3. sind unempfindlicher gegenüber Vibrationen und thermischen Umfeld-Änderungen;
4. können einfachst und direkt auf eine Gehäusewand geklebt werden, um die technisch kürzestmögliche und damit direkteste Verbindung zum Prüfling zu erlauben (womit höchstmögliche Sensitivität und Genauigkeit erreicht werden);
5. können Signale (=Vibrationen) senden und empfangen (einer der größten Vorteile);
6. können Signale zu definierten und koordinierten Zeiten, in spezifischen Anregungs-Mustern, definierter Frequenz, Intensität und Länge erzeugen.

In Kombination erlauben diese Eigenschaften eine bislang unerreichbar hochauflösende und höchst-sensitive, dabei erstmals sogar automatisierte vielfach schnellere, auch signaltechnisch erstmals reproduzierbare Schalltomographie, weil die Impulse nicht mehr manuell mittels Hammerschlag auf einen Sensor oder eine andere Position ("Stützstelle") erzeugt werden müssen, sondern stets automatisch in reproduzierbarer Art und Weise von allen Sensoren gesendet und empfangen werden.

Das bringt weitere erhebliche Vorteile und Fortschritte, weil man damit erstmals
· identische Impulse an den Sensoren anregen und damit vergleichende, absolutwert-orientierte, also kalibrierfähige Untersuchungen zur Materialanalyse anstellen kann, die vorher bei den manuell angeregten und damit zwangsläufig unterschiedlichen Impuls-Intensitäten und -formen prinzipiell unmöglich waren;
· während der Messung an einem Prüfling die Eigenschaften der gesendeten Signale (u.a. Intensität, Frequenz, Länge und Impulsform) in definierter Weise verändern und an spezifische Eigenschaften des Prüflings sowie der Umgebungsbedingungen (z.B. Vibrationen, Hintergrundrauschen, ...) anpassen kann;
· die spezifischen Eigenschaften der gesendeten Signale auch mittels Software-Zufallsgenerator verändern kann, um bis dato unbekannte Eigenschaften des Prüflings und seines Materials erkennen und charakterisieren zu können;
· je nach Bedarf die gesendeten Signale definiert zeitversetzt nacheinander an allen oder einer spezifischen Auswahl von Sensoren aussenden kann;
· optional auch alle Sensoren gleichzeitig in identischer und damit resonanter Weise anregen kann, um die "Antwort" des Prüflings darauf zu messen, was bekanntermaßen Aussagen zu spezifischen Materialeigenschaften (z.B. E-Modul) erlaubt;
· eine Tomographie über einen gewählten Zeitraum hinweg oder dauerhaft automatisiert und wiederholt ausführen lassen kann, ohne selber wiederholt an den Prüfling gehen zu müssen;
· nach der Anregung der Impulse die Relaxation des Materials auch am sendenden Sensor gemessen, aufgezeichnet und charakterisiert werden kann.

Bei Verwendung spezieller Piezo-Kristalle und entsprechender Anregungs-Elektronik wird die Schall-Tomographie damit also zugleich vielfach schneller (wenige Sekunden statt mehrerer Minuten pro Messung), automatisierter (damit alleine/eigenständig ausführbar), genauer (sogar absolutwert-kalibriert) und aussagekräftiger als bislang denkbar - bei zugleich geringeren Kosten und geringerem Aufwand. Im Bedarfsfalle können die Sensoren am Prüfling belassen werden, damit dieser je nach Ergebnis oder Aufgabe über eine definierte Zeit hinweg oder dauerhaft überwacht wird, ohne dass man erneut selber hingehen und aktiv werden muss.

### Elektrische Leitfähigkeit

Die elektrische Leitfähigkeit wird vor allem bestimmt von der Konzentration und Beweglichkeit von Ladungen im Material des Prüflings und damit von Eigenschaften, die insbesondere auch vom Feuchtegehalt abhängen, sowohl bei Bäumen, Hölzern, als auch beim Beton und im Boden.

Bei Bäumen ist der Wassergehalt außerdem ein Aspekt der sogenannten Vitalität, weil die Wasseraufnahme von seinem "Gesundheitszustand" und von seiner aktuellen "biologischen Aktivität" abhängt und damit einen wichtigen Parameter darstellt, auch bei ökologischen wie forstlichen Beurteilungen und Entscheidungen.

Schon von daher ist eine gemessene Leitfähigkeit in Ergänzung zur Schalltomographie eine zur Beurteilung des Zustands wertvolle, zusätzliche Information. Allerdings sind auch hier grundlegende Einschränkungen der Aussagefähigkeit dieses Verfahrens zu beachten.

Pilzbedingte Schäden in Bäumen und Hölzern wirken sich weit stärker auf die elektrische Leitfähigkeit aus, als der Wassergehalt, weil holzzerstörende Pilze die Leitfähigkeit deutlich erhöhen. Allerdings gibt es mitunter auch Pilze, die Holz besiedeln und die Leitfähigkeit erhöhen, das Holz jedoch nicht strukturell abbauen, also statisch unbedeutend sind. Aus einer hohen Leitfähigkeit alleine kann also weder direkt auf den Wassergehalt, noch auf den Zustand des Holzes geschlossen werden. Auch im Boden und im Beton lässt sich der Wassergehalt durch Leitfähigkeitsmessungen alleine nicht zuverlässig erfassen, weil der Gehalt an Ionen auch dort von vielen anderen Faktoren abhängt, u.a. vom Salzgehalt.

Daher ist eine Leitfähigkeitsmessung alleine weder ausreichend präzise noch verlässlich, weshalb sie eigentlich nur in Kombination mit anderen Verfahren verwendet werden sollte. In Kombination jedoch liefert sie wichtige zusätzliche Informationen, die wiederum helfen, Informationslücken anderer Verfahren zu schließen.

Bei Verwendung von elektrisch leitenden Verbindungsmitteln zwischen Sensor und Prüfling (z.B. Stahlnägel) kann die elektrische Leitfähigkeitsmessung mit der gleichen Hardware und Elektronik erfolgen, die auch den Piezo-Schallgeber antreibt, also quasi ohne nennenswerte zusätzliche technische Einrichtungen.

### Relative (Di-elektrische / kapazitive) Permittivität

Holz ist ein Dielektrikum und im trockenen Zustand sind die di-elektrischen Eigenschaften wohl bekannt, vor allem auch die Korrelation zwischen der di-elektrischen Konstante und der Rohdichte des Holzes. Bei entsprechend geschickter Wahl der Messparameter (vor allem hinsichtlich Anregungs-Frequenz und Spannung) kann der Einfluss der im Holz vorhandenen Inhaltsstoffe (Wasser, Gerbstoffe, Pilze, ...) auf die damit gemessene, relative Permittivität gesteuert (und auch deren Gehalt damit erfasst) werden.

In DE000010149317A1 ist eine mikroskopisch kleine Ausführung einer Hf-, also Hochfrequenz-Sonde zur Messung der Dielektrizitäts-Konstante von Holz beschrieben, um damit Jahrringdichteschwankungen hochauflösend zu messen. Im hier beschriebenen, tomographischen Verfahren muss die Miniaturisierung aber nicht so weit getrieben werden, denn es geht hier nur um eine lokale Messung im Bereich des Sensors, wozu die bereits weitläufig verfügbaren Komponenten zur Hf-Feuchtemessug in die Sensor-Elektronik integriert wird.

Durch entsprechende Wahl der Kondensator-Geometrie und -Abmessung kann die Eindringtiefe des elektrischen Feldes und damit der Mess- und Wirkbereich definiert werden. Mittels Veränderung der Frequenz des elektrischen Feldes können dann beispielsweise Rückschlüsse auf den Anteil an Wasser und anderen Inhaltsstoffe am Sensor gezogen werden. Da der hierzu notwendige Doppel-Kondensator (=Hf-Sender und Empfänger) recht klein ist, kann er neben dem Schall-Element (Piezo) angebracht werden, ohne die Sensoren nennenswert größer werden zu lassen. Zum elektrischen Antrieb und zur elektronischen Steuerung sind im Wesentlichen die gleichen Komponenten erforderlich, wie auch zur elektrischen Widerstandsmessung. Insofern wird die Schaltung damit nicht wesentlich größer.

### Thermische Leitfähigkeit

Im Vergleich zur elektrischen, ist die thermische Leitfähigkeit eines Festkörper-Materials mit nennenswertem Feuchtegehalt stärker von diesem abhängig, dafür aber kaum von der lokalen Ionenkonzentration (an und zwischen den Sensoren). Daher erlaubt die Messung von thermischen Impulsen bei Bäumen eine zuverlässigere Feststellung des aktuellen Wassergehalts, als eine elektrische Widerstandsmessung. Bislang wird dieses Prinzip der thermischen Leitungsmessung jedoch nur längs zur Faser (vertikal am Stamm) angewendet, um den "Saftfluss" zu beobachten: dabei wird die Übertragung thermischer Impulse von einem mittleren Stift zu zwei im festen Abstand ober- und unterhalb sitzenden Stiften gemessen.

Im hier beschriebenen, neuen System, erfolgt keine Messung der Übertragung der thermischen Impulse von Sensor zu Sensor, weil deren Abstand dafür in der Regel zu groß ist und zu viel Energie benötigen würde, sondern über das Abklingverhalten am jeweiligen Sensor: nach (beispielsweise ohmscher) Anregung eines thermischen Impulses in dem am/im Prüfling sitzenden Verbindungsmittel (Stift / Nagel / Schraube/...), wird gemessen, wie die Temperatur in eben diesem abklingt. Dank vieler Sensoren erlaubt dies eine Aussage über die lokale Feuchtigkeitsverteilung und ermöglicht in Kombination mit den anderen Messverfahren weitergehende Analysen und Beurteilungen als bislang möglich, insbesondere können damit die häufigen Fehlschlüsse aus der elektrischen Widerstandsmessung verhindert werden.

Die Abnahme der Temperaturanregung des Verbindungsmittels nach dem pulsweisen Erhitzen erlaubt jedoch nicht nur Aussagen über den jeweils lokalen Wassergehalt des Prüflings an den Positionen der Sensoren, sondern vielmehr insbesondere auch über die Geschwindigkeit des Wassertransports im Prüfling. Je schneller das Wasser im Baum nach oben fließt, umso größer seine Vitalität - und umso schneller kühlt das Verbindungsmittel ab. Damit erlaubt diese thermische Relaxation eine relativ direkte Aussage über den Gesundheitszustand des Baumes (insbesondere in Verbindung mit den anderen hier beschriebenen Verfahren) - und dies gerade auch im zeitlichen Verlauf, denn der neue Tomograph kann ja aufgrund der automatisierten Messung bei Bedarf über Stunden, Tage oder Wochen am Prüfling verbleiben und damit eben auch die zeitlichen Variationen der zu messenden Eigenschaften erfassen.

Ebenso werden also vor, während und nach der Erhitzung elektrische und mechanische Impulse vom Sensor automatisiert auf das Verbindungsmittel gegeben und gemessen sowie aufgezeichnet, wie schnell Schall, Ladung und Temperatur jeweils "abfließen" bzw. abklingen und wie schnell an den anderen Sensoren ankommen. Je fester bzw. dichter das Material, umso schneller bewegen sich beispielsweise die mechanischen Impulse durch den Prüfling. Je höher der Wassergehalt in einem Stamm, umso stärker jedoch die mechanische Dämpfung von angeregten Schwingungen.

Die Kombination dieser Methoden erlaubt damit erstmals eine koordinierte Erfassung und Beurteilung von wichtigen Kenngrößen, die bei Bäumen sowohl für die forstliche Nutzung, für die ökologische und klimatologische Forschung als auch für die sonstige Umwelt-Überwachung von entscheidender Bedeutung (Dichte, Elastizitätsmodul, ...) sind - und bislang entweder gar nicht, oder nur sehr umständlich und teuer erarbeitet werden konnten - zumal nicht quasi-zerstörungsfrei wie hier.

### Elektromagnetische Durchgängigkeit

Bei allen hier bislang beschriebenen tomographischen Verfahren kann aus den an einem Sensor empfangenen Signalen grundsätzlich nicht abgeleitet werden, welchen Weg die Impulse durch den Prüfling gelaufen sind. Dies beschränkt nicht nur die örtliche Auflösung, sondern auch insgesamt die Aussagefähigkeit der Methode(n). Die bisherigen Versuche, Bäume und Hölzer mit Radar- oder Röntgenstrahlen zu untersuchen, sind aus verschiedenen, zum Teil grundsätzlichen Gründen, in der Praxis gescheitert.

Insbesondere bei organischen Querschnitten ist die Durchgängigkeit für elektromagnetische Strahlen vor allem abhängig von der Dichte und, je nach Frequenz, auch vom Gehalt an Wasser und Ionen (gemäß der jeweiligen Dielektrizitätskonstante). Wer seinen Finger auf eine starke LED-Lampe drückt, sieht im schimmernden Durchlicht im Prinzip ein Abbild der Dichtverteilung im "Prüfling".

Da es mittlerweile miniaturisierte (Richt-) Antennen (11) für Radar, Mobilfunk, WIFI und andere international erlaubte Frequenzen, insbesondere auch aus den ISM-Bändern, gibt, können entsprechende elektronische Bauteil-Komponenten je nach Bedarf in die neuen Tomographie-Sensoren integriert werden, um die elektromagnetische Durchlässigkeit des jeweiligen Prüflings in die tomographische Kombinationsanalyse auf eine ganz neue Art zu integrieren.

Wenn die mittlerweile in miniaturisierter Form, zum Teil sogar als SMD-Print-Montage für Platinen verfügbaren Antennen verwendet werden, können diese als Sender und Empfänger kostengünstig ausgeführt werden - zumal es mittlerweile sehr kleine, aber dennoch leistungsstarke Sender in Chipform gibt, die u.a. in Mobiltelefonen verwendet werden (und genau deswegen aufgrund der hohen Stückzahlen auch entsprechend klein und günstig sind).

Je nach Ausführung einer vorzugsweise zylindrischen Abschirmung (12) kann der Abstrahlwinkel beispielsweise sodann auf einen oder wenige, vorzugsweise jeweils am Prüfling gegenüber positionierte Sensoren gerichtet werden, womit ein vergleichsweise eindeutig rekonstruierbarer Strahlweg erreicht wird.

In Kombination mit den anderen Verfahren kann auf diesem Wege die Rekonstruktion des inneren Zustands des Prüflings erheblich verbessert werden, weil damit eine direkte Zuordnung der betreffenden Messwerte zu einer Strecke durch den Prüfling möglich ist - im Gegensatz zu den anderen, bislang üblichen Verfahren (Schall, Thermo- und Elektro-Impulse), bei denen der konkrete Laufweg der angekommenen Impulse prinzipiell nicht bekannt ist und auch aus dem Impuls selber nicht errechnet werden kann.

Wenn die elektromagnetischen Impulse zeitgleich mit beispielsweise den mechanischen ausgesendet werden, hat dies außerdem den Vorteil, dass der Startimpuls für die Schall-Laufzeitmessung nicht zwingend über ein Kabel, sondern durch den elektromagnetischen Impuls gegeben werden kann, der sich mit Lichtgeschwindigkeit bewegt und daher ohne nennenswerten Zeitverzug ankommt.

In Kombination mit den anderen Verfahren verbessert die Verwendung elektromagnetischer Impulse die Gesamtgenauigkeit des System, kann jedoch aufgrund der immer noch begrenzten Anzahl an Stützstellen bei weitem nicht eine beispielsweise dem CT ähnliche Tomographie liefern - zumal bei Beton-Säulen mit Stahlbewährung oder bei Vorliegen anderer metallischer Komponenten die Durchlässigkeit für elektromagnetische Impulse ohnehin begrenzt bis nicht gegeben ist, bei organischen Materialien aber sehr gut funktioniert.

### Anregungs-Impuls-Relaxation

Bei den bislang etablierten tomographischen Verfahren werden Signale üblicherweise von einem Sender zu einem oder vielen Empfängern gesendet. Hier wird nun zusätzlich das Abklingen und resonante Verhalten der angeregten (mechanischen, thermischen und elektrischen) Impulse an sich aufgezeichnet, was insbesondere in Kombination erweiterte Analysen und Aussagen zum untersuchten Material ermöglicht, aber nur dann relevante zusätzliche Informationen liefert, wenn möglichst viele sendende Sensoren verwendet bzw. Positionen besetzt werden, um eine ausreichende örtliche Auflösung zu erreichen.

Auch deswegen werden die Sensoren vorzugsweise über ein gut strom- und wärmeleitendes, vorzugsweise metallisches Verbindungsmittel (je nach Anwendung Nägel, Stifte, Schrauben, Adapterplatten) mit dem zu prüfenden Material verbunden. Dieses Verbindungsmittel kann pulsweise für eine definierte Zeit und in definierter Weise mechanisch, thermisch oder elektrisch angeregt werden. Vor, während und nach dieser Anregung werden die entsprechenden physikalischen Messgrößen (mechanische, thermische oder elektrische) stetig überwacht und aufgezeichnet. Auf diesem Wege können beispielsweise alle Sensoren in gleicher und koordinierter Weise Impulse unterschiedlicher Frequenzen anregen, um das je nach Frequenz mitunter resonante Verhalten des Materials zu erfassen.

Die lokalen (mechanischen) Schwingungseigenschaften erlauben beispielsweise eine Aussage über lokale E-Moduli, die thermischen über den lokalen Feuchtegehalt und die elektrischen über den Gehalt an Ionen. Je schneller die Signale (=Anregungen) "abfließen", desto größer die entsprechenden lokalen Eigenschaften des Prüflings, wobei diese Eigenschaften mittels systematischer Veränderung von Anregungsfrequenz, -intensität und -länge noch besser und genauer ermittelt werden können.

Diejenigen physikalischen Messverfahren, die sich nicht stören, können bei alledem zeitgleich oder leicht versetzt ausgeführt werden, um Zeit zu sparen.

Ausführungsbeispiele der vorliegenden Erfindung können die folgenden Aspekte alternativ oder in beliebiger Kombination aufweisen:
Es können Verfahren und Vorrichtungen zur mehrdimensionalen, tomographischen Material- und Zustands-Prüfung, beispielsweise an Bäumen, Hölzern, Glocken, Boden oder Beton, angegeben werden.

Es können mechanische, elektrische, di-elektrische, thermische und/oder elektromagnetische Impulse bzw. Signale kombiniert und/oder zeitlich koordiniert ausgesendet, empfangen und/oder aufgezeichnet werden.

Es können alle (also auch die mechanischen) Impulse in allen Sensoren automatisiert in definierter Weise und damit reproduzierbar identisch erzeugt werden, um vergleichbare und erstmals absolutwert-kalibrierfähige Analysen zu ermöglichen.

Es können Höhe, Form, Intensität, Frequenz/Wellenform und/oder zeitliche Länge der ausgesendeten Impulse beispielsweise im Laufe einer Messung vorzugsweise automatisch verändert werden, um diese beispielsweise an Randbedingungen (Störsignale) und/oder Materialeigenschaften des Prüflings und/oder in Abhängigkeit von den jeweils erzielten Ergebnissen anzupassen und um damit beispielsweise die Aussagekraft der Analyse zu erhöhen.

Es kann nach der Anregung von Impulsen die Relaxation am sendenden Sensor bzw. dem Verbindungsmittel zum Prüfling gemessen und/oder aufgezeichnet werden.

Es können die Impulse zeitlich so überlappend oder zeitversetzt angeregt und/oder ausgesendet werden, dass die für die Messung insgesamt notwendige Zeit minimiert wird.

Es können insbesondere auch die mechanischen Signale zeitgleich und ggf. in resonanter Weise ausgesendet werden, um beispielsweise die entsprechenden Materialeigenschaften besser charakterisieren zu können.

Es können die Signale automatisiert und damit ohne menschliche Einwirkung bzw. Aktivität von den Sensoren selber erzeugt, gesendet, empfangen, gespeichert und/oder analysiert werden.

Es können elektromagnetische Impulse mittels baulich-konstruktiv miniaturisierter Richtantenne in einem vorgegebenen Winkel abgestrahlt werden, sodass erstmals ein definierter Impuls-Lauf-Pfad durch den Prüfling erreicht wird.

Es kann das Ankommen der elektromagnetischen Impulse als Startsignal für das Loslaufen der anderen Impulse, insbesondere auch der mechanischen verwendet werden.

Es kann an den Sensoren eine Anzeige realisiert werden, deren Nummer und/oder Position als Zahl und/oder Buchstabencode und/oder auch als Barcode angezeigt wird.

Es können die Sensoren mit einem vorzugsweise gleich-langen und/oder, zugfesten aber ansonsten weich-flexiblen Flachband-Kabel ("Flachriemen") äquidistant verbunden sein, der sowohl eine mechanische als auch eine elektrische Verbindung ermöglicht.

Es können die vorzugsweise als Flachbandkabel ausgeführten Verbindungs-Kabel per aufgebrachter Markierung eine automatische, vorzugsweise optische Vermessung des Prüflings, dessen Geometrie und/oder der Sensor-Positionen beispielsweise aus Photographien heraus ermöglichen.

Es können die Platinen mit vorzugsweise 4, optional auch 6 Verbindungselementen zum Anschluss der Verbindungskabel versehen werden, sodass eine ein-, zwei- oder dreidimensionale und/oder gitterförmige Anordnung möglich ist.

### Bezugszeichenliste

- 1: Platine
- 2: Steckverbinder
- 11: Antenne
- 12: Abschirmung
- 13: Gehäuse

## Patentansprüche

1. Verfahren zur mehrdimensionalen, tomografischen Material- und/oder Zustandsprüfung an einem Prüfling, wobei an dem Prüfling an mehreren vorgebbaren Positionen jeweils ein ein Gehäuse (13) aufweisender Sensor mit einer in dem Gehäuse (13) angeordneten Elektronik zur Aufnahme und Verarbeitung von Messdaten angeordnet wird, wobei mindestens ein Sensor oder die Elektronik mindestens eines Sensors zur Durchführung mehrerer unterschiedlicher physikalischer Messverfahren an dem Prüfling und zur Erzeugung, Auslösung und/oder Aussendung von für die Durchführung mindestens eines der Messverfahren erforderlichen Impulsen und/oder Signalen genutzt wird und
wobei die Impulse oder Signale automatisiert und damit ohne menschliche Einwirkung oder Aktivität von den Sensoren oder der Elektronik der Sensoren selbst empfangen und analysiert werden.

2. Verfahren nach Anspruch 1, **dadurch gekennzeichnet, dass** die Impulse oder Signale mechanische, elektrische, di-elektrische, thermische und/oder elektromagnetische Impulse oder Signale umfassen, wobei mechanische Impulse oder Signale mittels eines Piezo-Kristalls erzeugt werden können.

3. Verfahren nach Anspruch 1 oder 2, **dadurch gekennzeichnet, dass** die Impulse oder Signale oder eine Auswahl von gleichartigen oder verschiedenartigen Impulsen oder Signalen von dem oder den Sensoren oder der Elektronik kombiniert, gleichzeitig und/oder zeitlich koordiniert erzeugt, ausgelöst, ausgesendet, empfangen und/oder aufgezeichnet wird oder werden.

4. Verfahren nach einem der Ansprüche 1 bis 3, **dadurch gekennzeichnet, dass** die Impulse oder Signale oder eine Auswahl von gleichartigen oder verschiedenartigen Impulsen oder Signalen in mindestens einem Sensor - in definierter Weise oder per Zufallsgenerator - automatisiert erzeugt werden und/oder
dass die Impulse oder Signale automatisiert und damit ohne menschliche Einwirkung oder Aktivität von den Sensoren oder der Elektronik der Sensoren selbst angeregt, erzeugt, ausgelöst, ausgesendet und/oder gespeichert werden.

5. Verfahren nach einem der Ansprüche 1 bis 4, **dadurch gekennzeichnet, dass** die Höhe, Form, Intensität, Frequenz/Wellenform und/oder zeitliche Länge der ausgesendeten Impulse oder Signale adaptiv verändert wird oder werden, um - im Hinblick auf eine Erhöhung der Aussagekraft des Verfahrens - eine Anpassung an Randbedingungen, Störsignale und/oder Materialeigenschaften des Prüflings und/oder an bereits aufgenommene Messdaten oder erzielte Messergebnisse durchzuführen.

6. Verfahren nach Anspruch 5, **dadurch gekennzeichnet, dass** die Anpassung im Laufe einer Messung und/oder automatisch adaptiv erfolgt.

7. Verfahren nach einem der Ansprüche 1 bis 6, **dadurch gekennzeichnet, dass** nach einer Anregung, Erzeugung, Auslösung und/oder Aussendung eines oder mehrerer Impulse oder Signale durch einen Sensor oder eine Elektronik des Sensors eine Relaxation an diesem Sensor, an dieser Elektronik und/oder an einem Verbindungsmittel zum Prüfling gemessen und/oder aufgezeichnet wird.

8. Verfahren nach einem der Ansprüche 1 bis 7, **dadurch gekennzeichnet, dass** die Impulse oder Signale zeitlich so überlappend oder zeitversetzt angeregt, erzeugt, ausgelöst und/oder ausgesendet werden, dass die für die Prüfung oder eine Messung insgesamt notwendige Zeit minimiert wird, oder dass mechanische Impulse oder Signale zeitgleich oder in resonanter Weise ausgesendet werden, um beispielsweise entsprechende Materialeigenschaften besser charakterisieren zu können.

9. Verfahren nach einem der Ansprüche 1 bis 8, **dadurch gekennzeichnet, dass** elektromagnetische Impulse oder Signale mittels einer - vorzugsweise baulich-konstruktiv miniaturisierter - Richtantenne in einem vorgegebenen Winkel abgestrahlt werden, sodass ein definierter Impuls-Signal-Lauf-Pfad durch den Prüfling erreicht wird und/oder
dass ein Ankommen von insbesondere elektromagnetischen Impulsen oder Signalen als Startsignal für das Loslaufen von Impulsen oder Signalen von mindestens einem anderen Sensor, insbesondere auch der mechanischen Impulse oder Signale, verwendet wird.

10. Verfahren nach einem der Ansprüche 1 bis 9, **dadurch gekennzeichnet, dass** an den Sensoren eine Anzeige realisiert wird, deren Nummer und/oder Position als Zahl und/oder Buchstabencode und/oder als Code oder Barcode angezeigt wird.

11. Verfahren nach einem der Ansprüche 1 bis 10, **dadurch gekennzeichnet, dass** die Sensoren mit einem Kopplungsmittel verbunden werden, das sowohl eine mechanische als auch eine elektrische Verbindung ermöglicht, wobei vorzugsweise als Kopplungsmittel ein Flachbandkabel oder Flachriemen verwendet wird.

12. Verfahren nach Anspruch 11, **dadurch gekennzeichnet, dass** das Kopplungsmittel zur äquidistanten Verbindung der Sensoren in Form von gleichlangen und/oder zugfesten und/oder weich-flexiblen Kopplungselementen realisiert wird.

13. Verfahren nach Anspruch 11 oder 12, **dadurch gekennzeichnet, dass** das Kopplungsmittel oder die Kopplungselemente per aufgebrachter Markierung eine automatische, vorzugsweise optische, Vermessung des Prüflings, dessen Geometrie und/oder der Sensor-Positionen ermöglicht oder ermöglichen, beispielsweise anhand einer Fotografie.

14. Verfahren nach einem der Ansprüche 11 bis 13, **dadurch gekennzeichnet, dass** die Sensoren oder Platinen der Sensoren mit - vorzugsweise vier oder sechs - Verbindungselementen zum Anschluss der Kopplungsmittel oder Kopplungselemente derart versehen werden, dass eine ein-, zwei- oder dreidimensionale und/oder gitterförmige gekoppelte Anordnung der Sensoren möglich ist.

15. Vorrichtung zur mehrdimensionalen, tomografischen Material- und/oder Zustandsprüfung an einem Prüfling, insbesondere zur Durchführung eines Verfahrens nach einem der Ansprüche 1 bis 14, mit mehreren jeweils eine Elektronik aufweisenden Sensoren, wobei an dem Prüfling an mehreren vorgebbaren Positionen jeweils ein ein Gehäuse aufweisender Sensor mit einer in dem Gehäuse angeordneten Elektronik zur Aufnahme und Verarbeitung von Messdaten anordenbar ist, wobei mindestens ein Sensor oder die Elektronik mindestens eines Sensors zur Durchführung mehrerer unterschiedlicher physikalischer Messverfahren an dem Prüfling und zur Erzeugung, Auslösung und/oder Aussendung von für die Durchführung mindestens eines der Messverfahren erforderlichen Impulsen und/oder Signalen ausgebildet ist und
wobei die Sensoren oder die Elektronik der Sensoren derart ausgebildet sind, dass die Impulse oder Signale automatisiert und damit ohne menschliche Einwirkung oder Aktivität von den Sensoren oder der Elektronik der Sensoren selbst empfangen und analysiert werden können.

## Claims

1. Method for the multidimensional, tomographic testing of materials and/or conditions on a test specimen, wherein a sensor comprising a housing (13) with an electronic system arranged in the housing (13) for recording and processing measurement data is arranged on the test specimen at a plurality of predeterminable positions, wherein at least one sensor or the electronic system of at least one sensor is used to carry out a plurality of different physical measurement methods on the test specimen and to generate, trigger and/or emit pulses and/or signals required for carrying out at least one of the measurement methods and
wherein the pulses or signals are received and analyzed automatically and thus without human influence or activity by the sensors or the electronics of the sensors themselves.

2. Method according to claim 1, **characterized in that** the pulses or signals comprise mechanical, electrical, di-electrical, thermal and/or electromagnetical pulses or signals, wherein mechanical pulses or signals can be generated by means of a piezo crystal.

3. Method according to claim 1 or 2, **characterized in that** the pulses or signals or a selection of similar or different pulses or signals is or are generated, triggered, emitted, received and/or recorded by the sensor or sensors or the electronics in a combined, simultaneous and/or temporally coordinated manner.

4. Method according to one of claims 1 to 3, **characterized in that** the pulses or signals or a selection of similar or different pulses or signals are generated automatically in at least one sensor - in a defined manner or by random generator - and/or that the pulses or signals are excited, generated, triggered, transmitted and/or stored automatically and thus without human influence or activity by the sensors or the electronics of the sensors themselves.

5. Method according to one of claims 1 to 4, **characterized in that** the level, shape, intensity, frequency/waveform and/or time length of the pulses or signals transmitted from is or are adaptively changed in order - with a view to increasing the informative value of the method - to carry out an adaptation to boundary conditions, interference signals and/or material properties of the test specimen and/or to measurement data already recorded or measurement results achieved.

6. Method according to claim 5, **characterized in that** the adaptation is carried out adaptively in the course of a measurement and/or automatically.

7. Method according to one of claims 1 to 6, **characterized in that** after excitation, generation, triggering and/or emission of one or more pulses or signals by a sensor or electronics of the sensor, a relaxation at this sensor, at these electronics and/or at a connecting means to the test specimen is measured and/or recorded.

8. Method according to one of the claims 1 to 7, **characterized in that** the pulses or signals are excited, generated, triggered and/or emitted in a temporally overlapping or time-delayed manner in such a way that the total time required for the test or a measurement is minimized, or that mechanical pulses or signals are emitted simultaneously or in a resonant manner in order, for example, to be able to better characterize corresponding material properties.

9. Method according to one of the claims 1 to 8, **characterized in that** electromagnetic pulses or signals are radiated by means of a directional antenna - preferably miniaturized in terms of construction - at a predetermined angle so that a defined pulse-signal path is achieved through the test specimen and/or in that an arrival of, in particular, electromagnetic pulses is used as a start signal for the start of pulses or signals from at least one other sensor, in particular also the mechanical pulses or signals.

10. Method according to one of the claims 1 to 9, **characterized in that** a display is realized at the sensors, the number and/or position of which is displayed as a number and/or letter code and/or as a code or barcode.

11. Method according to one of the claims 1 to 10, **characterized in that** the sensors are connected to a coupling means which enables both a mechanical and an electrical connection, preferably a flat ribbon cable or flat belt being used as the coupling means.

12. Method according to claim 11, **characterized in that** the coupling means for equidistant connection of the sensors is realized in the form of coupling elements of equal length and/or tensile strength and/or soft flexibility.

13. Method according to claim 11 or 12, **characterized in that** the coupling means or the coupling elements enable an automatic, preferably optical, measurement of the test specimen, its geometry and/or the sensor positions, for example by means of a photograph.

14. Method according to one of claims 11 to 13, **characterized in that** the sensors or boards of the sensors are provided with - preferably four or six - connecting elements for connecting the coupling means or coupling elements in such a way that a one-, two- or three-dimensional and/or grid-shaped coupled arrangement of the sensors is possible.

15. Device for multidimensional, tomographic material and/or status testing on a test specimen, in particular for carrying out a method according to one of claims 1 to 14, having a plurality of sensors each having electronics, it being possible to arrange on the test specimen at a plurality of predeterminable positions in each case a sensor comprising a housing (13) having electronics arranged in the housing (13) for recording and processing measurement data, at least one sensor or the electronics of at least one sensor being designed for carrying out a plurality of different physical measurement methods on the test specimen and for generating, triggering and/or transmitting pulses and/or signals required for carrying out at least one of the measurement methods and
wherein the sensors or the electronics of the sensors are designed in a way, that the pulses or signals can be received and analyzed automatically and thus without human influence or activity by the sensors or the electronics of the sensors themselves.

## Revendications

1. Procédé d'examen matériel et/ou d'état tomographique multidimensionnel sur une pièce à examiner, dans lequel un capteur comporte un boîtier (13) avec une électronique disposée dans le boîtier (13) pour l'acquisition et le traitement de données de mesure est disposé à plusieurs positions prédéfinies sur la pièce à examiner, dans lequel au moins un capteur ou l'électronique d'au moins un capteur est utilisé pour la réalisation de plusieurs procédés de mesure physiques différents sur la pièce à examiner et pour la génération, le déclenchement et/ou l'émission d'impulsions et/ou de signaux nécessaires à la réalisation d'au moins un des procédés de mesure, et
dans lequel les impulsions ou signaux sont reçus et analysés automatiquement par les capteurs ou l'électronique des capteurs eux-mêmes, c'est-à-dire sans intervention ou activité humaine.

2. Procédé selon la revendication 1, **caractérisé en ce que** les impulsions ou signaux comprennent des impulsions ou signaux mécaniques, électriques, diélectriques, thermiques et/ou électromagnétiques, les impulsions ou signaux mécaniques pouvant être générés au moyen d'un cristal piézoélectrique.

3. Procédé selon la revendication 1 ou 2, **caractérisé en ce que** les impulsions ou signaux ou une sélection d'impulsions ou de signaux de même type ou de types différents sont générés, déclenchés, émis, reçus et/ou enregistrés de manière combinée, simultanée et/ou coordonnée temporellement par le ou les capteurs ou l'électronique.

4. Procédé selon l'une des revendications 1 à 3, **caractérisé en ce que** les impulsions ou signaux ou une sélection d'impulsions ou de signaux de même type ou de types différents sont générés automatiquement dans au moins un capteur - de manière définie ou par générateur aléatoire - et/ou
**en ce que** les impulsions ou signaux sont excités, générés, déclenchés, émis et/ou stockés automatiquement par les capteurs ou l'électronique des capteurs eux-mêmes, c'est-à-dire sans intervention ou activité humaine.

5. Procédé selon l'une des revendications 1 à 4, **caractérisé en ce que** l'amplitude, la forme, l'intensité, la fréquence/forme d'onde et/ou la durée temporelle des impulsions ou signaux émis sont modifiées de façon àdaptative afin de - dans le but d'augmenter la pertinence du procédé - effectuer une adaptation aux conditions limites, aux signaux parasites et/ou aux propriétés matérielles de la pièce à examiner et/ou aux données de mesure déjà acquises ou aux résultats de mesure obtenus.

6. Procédé selon la revendication 5, **caractérisé en ce que** l'adaptation s'effectue au cours d'une mesure et/ou de façon àutomatiquement adaptative.

7. Procédé selon l'une des revendications 1 à 6, **caractérisé en ce que**, après une excitation, génération, déclenchement et/ou émission d'une ou plusieurs impulsions ou signaux par un capteur ou une électronique du capteur, une relaxation est mesurée et/ou enregistrée au niveau de ce capteur, de cette électronique et/ou d'un moyen de connexion à la pièce à examiner.

8. Procédé selon l'une des revendications 1 à 7, **caractérisé en ce que** les impulsions ou signaux sont excités, générés, déclenchés et/ou émis de façon à se chevaucher temporellement ou à être décalés dans le temps, de sorte que le temps total nécessaire à l'examen ou à une mesure est minimisé, ou que des impulsions ou signaux mécaniques sont émis simultanément ou de manière résonnante afin de mieux caractériser, par exemple, les propriétés matérielles correspondantes.

9. Procédé selon l'une des revendications 1 à 8, **caractérisé en ce que** des impulsions ou signaux électromagnétiques sont émis selon un angle prédéfini au moyen d'une antenne directionnelle - de préférence de construction miniaturisée -, de sorte qu'un chemin de propagation d'impulsions-signaux défini est obtenu à travers la pièce à examiner et/ou
**en ce que** l'arrivée d'impulsions ou de signaux, notamment électromagnétiques, est utilisée comme signal de démarrage pour le départ d'impulsions ou de signaux d'au moins un autre capteur, en particulier aussi des impulsions ou signaux mécaniques.

10. Procédé selon l'une des revendications 1 à 9, **caractérisé en ce qu'**un affichage est réalisé sur les capteurs, dont le numéro et/ou la position est affiché sous forme de chiffre et/ou de code alphanumérique et/ou de code ou de code-barres.

11. Procédé selon l'une des revendications 1 à 10, **caractérisé en ce que** les capteurs sont connectés à un moyen de couplage qui permet à la fois une connexion mécanique et électrique, un câble plat ou une courroie plate étant de préférence utilisé comme moyen de couplage.

12. Procédé selon la revendication 11, **caractérisé en ce que** le moyen de couplage pour la connexion équidistante des capteurs est réalisé sous la forme d'éléments de couplage de même longueur et/ou résistants à la traction et/ou souples et flexibles.

13. Procédé selon la revendication 11 ou 12, **caractérisé en ce que** le moyen de couplage ou les éléments de couplage permettent une mesure automatique, de préférence optique, de la pièce à examiner, de sa géométrie et/ou des positions des capteurs, par exemple à l'aide d'une photographie, grâce à un marquage appliqué.

14. Procédé selon l'une des revendications 11 à 13, **caractérisé en ce que** les capteurs ou les cartes des capteurs sont pourvus de quatre ou six éléments de connexion - de préférence - pour le raccordement des moyens de couplage ou des éléments de couplage de façon à permettre une disposition couplée des capteurs à une, deux ou trois dimensions et/ou en forme de grille.

15. Dispositif d'examen matériel et/ou d'état tomographique multidimensionnel sur une pièce à examiner, en particulier pour la mise en œuvre d'un procédé selon l'une des revendications 1 à 14, avec plusieurs capteurs comportant chacun une électronique, dans lequel un capteur comportant un boîtier et une électronique disposée dans le boîtier pour l'acquisition et le traitement de données de mesure peut être disposé à plusieurs positions prédéfinies sur la pièce à examiner, dans lequel au moins un capteur ou l'électronique d'au moins un capteur est configuré pour la réalisation de plusieurs procédés de mesure physiques différents sur la pièce à examiner et pour la génération, le déclenchement et/ou l'émission d'impulsions et/ou de signaux nécessaires à la réalisation d'au moins un des procédés de mesure, et
dans lequel les capteurs ou l'électronique des capteurs sont configurés de façon à ce que les impulsions ou signaux puissent être reçus et analysés automatiquement par les capteurs ou l'électronique des capteurs eux-mêmes, c'est-à-dire sans intervention ou activité humaine.
